# EUROPEAN PATENT SPECIFICATION

(11) **EP 2 127 433 B1**
(45) Date of publication and mention of the grant of the patent: **10.04.2013**
(21) Application number: 08708072.7
(22) Date of filing: 22.01.2008
(51) Int. Cl.: H04W 52/36, H04W 52/24, H04W 16/14, H04W 16/32, H04W 52/14, H04W 52/40

(54) **INTERFERENCE CONTROL IN A MOBILE NETWORK STRUCTURE WITH PRIVATE PICO/HOME BASE STATIONS**
INTERFERENZSTEUERUNG IN EINER MOBILEN NETZWERKSTRUKTUR MIT PRIVATEN PICO/HOME-BASISSTATIONEN
RÉGULATION DU BROUILLAGE DANS UNE STRUCTURE DE RÉSEAU MOBILE COMPRENANT DES STATIONS DE BASE DOMESTIQUES PRIVÉES OU DES PICO-STATIONS DE BASE PRIVÉES

(30) Priority: 23.01.2007 GB 0701244
(43) Date of publication of application: 02.12.2009
(73) Proprietor: Nokia Siemens Networks GmbH & Co. KG, 80506 Munchen (DE)
(72) Inventor: CENTONZA, Angelo, Winchester SO22 BA (GB)
(74) Representative: Bruglachner, Thomas E.
(86) International application number: PCT/EP2008/050707
(87) International publication number: WO 2008/090154

(56) References cited:
- WO-A-98/09465
- US-A- 5 778 322
- US-A- 5 822 693

## Description

This invention relates to a method of controlling interference between first and second wireless communication systems and to a corresponding wireless communication system.

In 3^{rd} generation partnership project (3GPP) systems, universal mobile telecommunications (UMTS) operators have proposed so called home base stations, or pico base stations, i.e. plug and play base stations controlling basic radio network controller (RNC) functions, that are meant to be installed for indoor use, without necessarily knowing the whereabouts of neighbouring cells, i.e. macro cells, micro cells, or other home base cells.

In this description, the term pico, or home base station is used to refer to the consumer installed 3G base station and the terms micro and macro base stations refer to 3G networked base stations, not controlled by the consumer. Generally, macro base stations cover a wide area, typically several kilometres in radius in the urban environment and provide public access i.e. to all users supported by that operator. Micro base stations offer the same functionality, but cover a smaller area, typically small urban sites, such as large shopping complexes, or railway stations. Both macro and micro deployment require an expert installation where the sites are carefully chosen, typically a-priori radio planning is involved, and installation is by expert engineers who are able to make on-site adjustments. Home, or pico base stations cover a much smaller area, such as a single room, or single house and have ranges typically of a few 10's of metres, with typically theoretical free space range limits of 100 to 200 metres. Home, or pico stations mandate a user non-expert installation due to cost and practical constraints, since expert engineer time is too expensive and there are too few to support a large scale domestic deployment.

Each home base station covers a default area, which may be included within a macro cell area. Such a scenario requires the presence of adequate mechanisms for uplink power and orthogonal, or scrambling, code management. This is because the home base station has no iub interface, so is not synchronised with the rest of the UMTS network and therefore may assign uplink power to its associated user devices, or user equipments (UEs), which is too high and which causes interference for uplink reception at the macro base station. Furthermore, the home base station may accidentally use the same downlink orthogonal code as the macro cell has allocated, therefore impairing correct signal reception for those UEs connected to the macro cell base station and falling within the coverage area of the home base station, and generating too much interference for the systems to work effectively. The latter phenomenon is due to orthogonal codes assignment, between home base station and macro base station, not being synchronised.

In the UK Patent Application GB 2 443 865 A the problem of uplink power setup in the case of a home base station included within a macro cell has been addressed by allowing the home base station (HBS) to act as a logical UE at power up, so that the HBS achieves power synchronisation with the Macro Node B, before allowing UEs to communicate using the HBS as a base station.

US 5,822,693 discloses a method and apparatus for controlling a base station of a first telecommunications system using control information generated in a second telecommunications system and transferred to the base station through a mobile station capable of operating in both the first and second systems. The control information is transmitted from the second system to the mobile station during operation of the mobile station in the second system. Upon operation of the mobile station in the first system the control information is then transferred to the first system. The control information is then used within the first system to control operation of a base station of the first system.

US 5,778,322 discloses that a transceiver frequency and power level are allocated in a radio communications system which includes a base station, a radio personal communications terminal, and a radio personal communications network, by using a smart card to store frequency and power level indicators. The stored indicators are used to set personal communications terminal-to-base station communications. The smart card may be removably coupled to the base station or the personal communications terminal. Since the smart cards are issued by the radio personal communications system carrier, appropriate frequencies and power levels can be assigned for base stations, to minimize same channel interference with the radio personal communications network.

However, this still leaves a number of issues to be addressed. The HBS might be located further from the macro base station than the UE is, or the HBS might be in such a position as to be subject to path losses towards the macro base station, which are much higher than those affecting the UE. In this case the maximum uplink power assigned to the logical UE integrated in the HBS is too high for the actual UE trying to connect to the HBS. If the UE connecting to the HBS uses such maximum power, the power causes the overall uplink cell interference to increase beyond acceptable limits.

Another issue is that the interference scenario on the basis of which the maximum uplink power is calculated by the macro base station, such as the fact that the path loss between UE and HBS, at the moment when the logical UE built into the HBS tries to connect to the macro base station, changes over in time. Hence, a more frequent maximum uplink power update needs to be performed by letting the UE, which is connected to the HBS, connect for a short time to the macro cell. Managing assignment of orthogonal codes between macro base station and HBS has not been addressed to date.

In accordance with the present invention a method of controlling interference between first and second wireless communication systems and a wirless communication system is provided according to the subject-matter of the independent Claims.

Preferably, the allocated uplink power of the first system user device is notified by the first system user device to the home/pico base station and the home/pico base station keeps uplink power for all its user devices below the allocated maximum.

Alternatively, the first system user device ensures that it does not exceed the allocated maximum uplink power.

Preferably, the trigger comprises one of setting up a radio bearer between the home/pico base station and the first system user device; and expiry of a periodic timer.

Preferably, the allocated maximum uplink power at the home/pico base station is the minimum of the allocated maximum uplink power of all user devices in the first wireless communication system.

Preferably, a pilot channel from the home/pico base station is subject to a time shift of a predetermined amount.

Preferably, the first system user device notifies the home/pico base station of its inability to decode a pilot channel, whereafter the home/pico base station applies the time shift.

An example of a method of controlling interference between communication systems according to the present invention will now be described with reference to the accompanying drawings in which:

Figure 1 illustrates a typical network arrangement in which the method of the present invention is applied; and

Figure 2 is a flow chart illustrating the method of the present invention in the network of Fig. 1

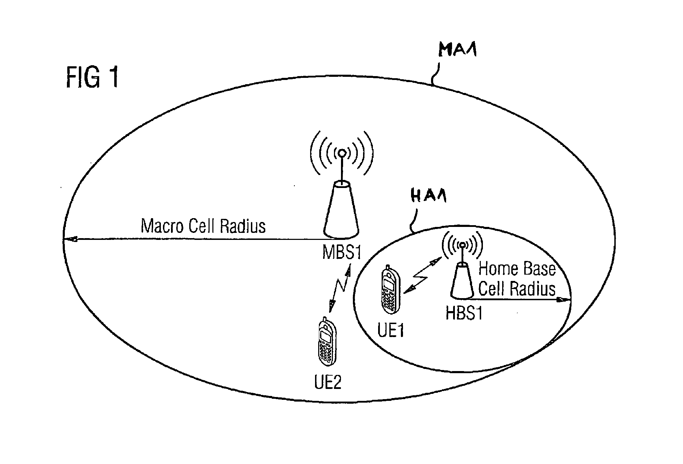

Fig. 1 illustrates an example of the invention comprising a UMTS network formed by two systems, for simplicity shown as one home base station HBS I and associated UE UE1 and one macro base station MBS 1 and associated UE UE2, although each system base station can handle many UEs. A cell area HA1 of the home base station cell and a cell area MA1 of the macro base station cell completely overlap and HA1 falls within MA1. UE2 is connected to the macro base station MBS 1 and UE1 is connected to the home base station HBS1, such that uplink signals of UE1 may create interference at the macro base station. Moreover, downlink signals from HBS1 to UE1 may create interference at UE2. With this scenario there may be problems of maximum uplink power setup for UE1 and orthogonal code assignment for downlink transmission from the home base station to UE 1.

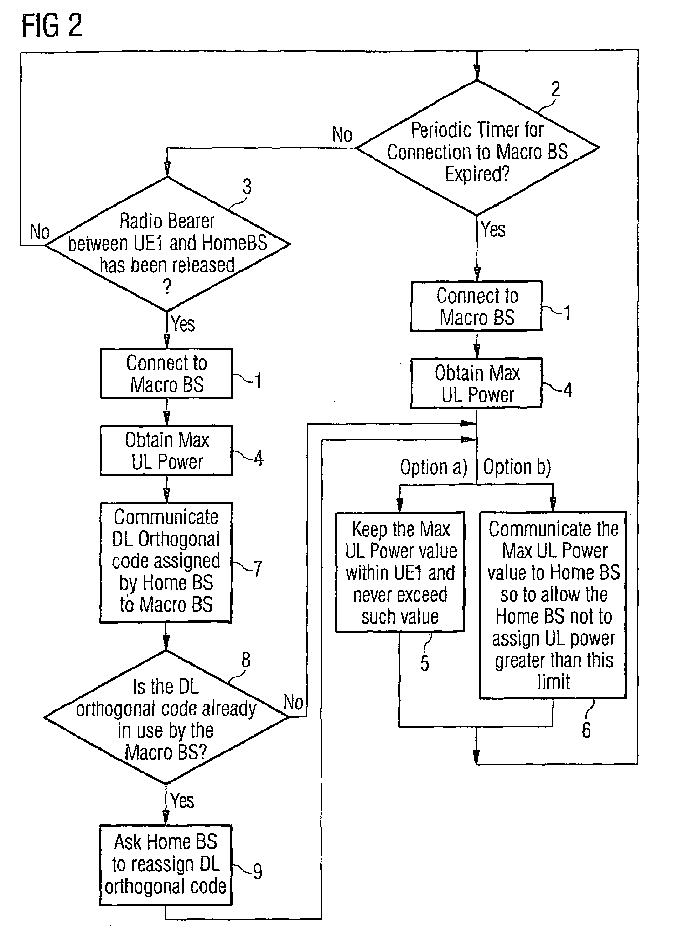

With reference also to Fig.2, whilst UE1 is connected to HBS1, UE1 tries to connect 1 to the macro base station for uplink power and orthogonal codes management purposes only. This may be done either periodically 2, or just after a radio bearer is assigned 3 from the home base station to UE1 and released, along with an assigned scrambled code. In the latter case of radio bearer assignment, the attempt to connect to the macro base station is performed before communication between UE1 and HBS I has started.

Once connected to the macro base station, UE1 obtains 4 the maximum uplink power to be used within the macro cell by carrying out closed loop power control. In the example where a time has expired, this power can be used in two ways. Either, UE1 keeps 5 within the value for the maximum uplink power and never exceeds this value, even if the HBS asks to raise the uplink power beyond such a limit, or UE1 communicates 6 the maximum uplink power value to the home base station, so that HBS1 treats this limit as the value beyond which the uplink power for UE1 shall not be raised and no greater uplink power is assigned.

In the case where a radio bearer has been released and once connected 1 to the macro base station, UE1 also communicates 7 to the macro base station the downlink orthogonal code assigned by the home base station for downlink communication. Since there is no connection between the RNC function of the first and second system base stations, it is possible for the same scrambling code to be allocated to different user devices in the first and second communication systems. If the macro base station MBS1 discovers 8 that this code is already used by the macro base station for downlink communication with another UE, a message 9 is sent from the macro base station to UE1 asking it to forward to the home base station a downlink orthogonal code reassignment. UE1 therefore requests that the home base station modifies the downlink orthogonal code initially employed.

The main problem arises with unscrambled pilot channels transmitting periodically for the UE to synchronise with the network. If pilot channels from the MBS and HBS send at the same time, then it is not possible for the UE to connect. This is dealt with by allowing the synchronisation from the HBS to the first UE to drift in time, so that the clash does not endure. The MBS is more accurate, so the imposed drift removes the overlap and allows the pilot channels for each system to be decoded. If the UE notices that it cannot decode a pilot signal, it notifies the HBS which applies the offset to the time synchronisation code. Typically, this is either an addition or removal of a delay of a predetermined amount to decouple the two systems.

A non-limiting example of an access architecture than may be used for at least one of the network is based on a concept known as long term evolution (LTE). A particular example of such systems is the Evolved Universal Terrestrial Radio Access (E-UTRA). An Evolved Universal Terrestrial Radio Access Network (E-UTRAN) consists of E-UTRAN Node Bs (eNBs) which are configured to provide base station and control functionalities. In these systems various functions that have been conventionally handled based on centralised control can be handled in a distributed manner. This kind of distributed architecture is sometimes referred to as a "flat architecture". For example, the eNBs nodes can provide independently E-UTRA features such as user plane radio link control/medium access control/physical layer protocol (RLC/MAC/PHY) and control plane radio resource control (RRC) protocol terminations towards the user devices.

The advantages of the present invention include dynamic management of the maximum uplink power used by UEs connected to a home base station and located within a macro cell; and dynamic management of downlink orthogonal codes assigned by a home base station to a UE located within a macro cell.

The first of these allows situations to be avoided where the interference, or the path loss scenario affecting the signal strength received by the UE connected to the base station, changes in such a way as to require high uplink transmission power that could generate such high interference at the macro base station as to impair correct reception of other uplink signals.

The second of these addresses the problem of possible conflicts in downlink orthogonal code assignment between the macro base station and the home base station. If left unresolved, this problem can lead to lack of communication between the UE and the macro or home base station on the downlink channel where the conflicting orthogonal code is used.

The required data processing functions may be provided by means of one or more data processors. All data processing may be provided in a processing unit provided in an access system, or distributed across several data processing modules. The above described functions may be provided by separate processors or by an integrated processor. An appropriately adapted computer program code product or products may be used for implementing the embodiments, when loaded on an appropriate processor, for example in a processor of an access system controller or a user device. The program code product for providing the operation may be stored on and provided by means of a carrier medium such as a carrier disc, card or tape. A possibility is to download the program code product to the mobile device via a data network.

It is noted that whilst embodiments have been described in relation to user devices such as mobile terminals, embodiments of the present invention are applicable to any other suitable type of apparatus suitable for communication via a plurarity access networks.

It is also noted that although certain embodiments were described above by way of example with reference to certain exemplifying architectures for wireless networks, technologies and standards, embodiments may be applied to any other suitable forms of communication systems than those illustrated and described herein. It is also noted that the terms netwok or subnetwork are understood to refer to any network configured for enabling wireless communication for a user equipment.

It is also noted herein that while the above describes exemplifying embodiments of the invention, there are several variations and modifications which may be made to the disclosed solution without departing from the scope of the present invention, which is defined by the appended Claims.

## Claims

1. A method of controlling interference between first and second wireless home/pico base station communication systems, each system comprising a base station (HBS1, MBS1) , the method comprising in response to a trigger, setting up a connection between a first system user device (UE1), the first system user device (uE1) being associated with a first system base station beign a home/pico base station (HBS1) and a second system base station being a macro base station (MBS1); allocating by the macro base station (MBS1), a maximum uplink power for the first system user device (uE1); and halting transmissions between the first system user device (UE1) and the home/pico base station (HBS1), such that the maximum uplink power is not exceeded and interference between the first system user device (UE1) and the macro base station (MBS1) and other user devices is minimised, wherein the method further comprises allocating a downlink orthogonal code to the first system user device (UE1) from the home/pico base station (HBS1); notifying by the first system user device (UE1), the macro base station (MBS1) of the allocated code and comparing by the macro base station (MBS1), the allocated code with codes allocated by the macro base station (MBS1); wherein the macro base station (MBS1) asks the first system user device (UE1) to request the home/pico base station (HBS1) to change the code allocated to the first system user device (UE1) from the home/pico have station home/pico base station if the result of the comparison is that that code has already been allocated by the macro base station (MBS1).

2. A method according to claim 1, wherein the allocated uplink power of the first system user device (UE1) is notified by the first system userdevice (UE1) to the home/pico base station (HBS1) and the home/pico base station (HBS1) keeps uplink power for all its user devices below the allocated maximum.

3. A method according to claim 1, wherein the first system user device (UE1) ensures that it does not exceed the allocated maximum uplink power.

4. A method according to any preceding claim, wherein the trigger comprises one of setting up a radio bearer between the home/pico base station (HBS1) and the first system user device (UE1); and expiry of a periodic timer.

5. A method according to any preceding claim, wherein the allocated maximum uplink power at the home/pico base station (HBS1) is the minimum of the allocated maximum uplink power of all user devices in the first wireless communication system.

6. A method according to any preceding claim, wherein a pilot channel from the home/pico base station (HBS1) is subject to a time shift of a predetermined amount.

7. A method according to claim 6, wherein the first system user device (UE1) notifies the home/pico base station (HBS1) of its inability to decode a pilot channel, whereafter the home/pico base station (HBS1) applies the time shift.

8. A wireless communication system comprising a macro base station (MBS1), a home/pico base station (HBS1) and a first user device (UE1) being associated with the home/pico base station (HBS1) wherein, in response to a trigger,
the first user device (UE1) has means configured to set up a connection with the macro base station (MBS1);
the macro base station (MBS1) has means configured to allocate a maximum uplink power for the first user device (UE1);
the first user device (UE1) has means configured to halt transmissions to the home/pico base station (HBS1), such that the maximum uplink power is not exceeded and interference between the first system user device (UE1) and the macro base station (MBS 1) is minimised;
the home/pico base station (HBS1) has means configured to allocate a downlink orthogonal code to the first user device (UE1);
the first user device (UE1) has means configured to notify the macro base station (MBS1) of the allocated code;
the macro base station (MBS1) has means further configured to compare the allocated code with codes allocated by itself, **characterised in that** the macro base station (MBS1) has means further configured to ask the first user device (UE1) to request the home /pico base station (HBS1) to change the code allocated to the first user device (UE1) if the result of the comparison is that that code has already been allocated by the macro base station (MBS1).

9. A wireless communication system according to claim 8, wherein the first user device (UE1) is further configured to notify the home/pico base station (HBS 1) of the allocated uplink power.

10. A wireless communication system according to claim 9, wherein the home/pico base station (HBS1) is configured to keep uplink power for all its user devices below the allocated maximum.

11. A wireless communication system_according to claim 8, wherein the first user device (UE1) is configured to ensure that it does not exceed the allocated maximum uplink power.

12. A wireless communication system according to any of claims 8 to 11, wherein the home/pico base station (HBS1) is further configured to apply a time shift of a predetermined amount to a pilot channel.

13. A wireless communication system according to claim 12, wherein the first user device (UE1) is configured to notify the home/pico base station (HBS1) of its inability to decode a pilot channel, and wherein the home/pico base station is configured to apply the time shift in response to the notification.

14. A computer program comprising program code means adapted to perform the steps of any of claims 1 to 7 when the program is run on a processor.

## Patentansprüche

1. Verfahren zum Steuern von Interferenz zwischen ersten und zweiten drahtlosen Kommunikationssystemen, wobei jedes System eine Basisstation (HBS1, MBS1) umfasst, umfassend als Reaktion auf einen Auslöser Aufbauen einer Verbindung zwischen einer ersten Systembenutzervorrichtung (UE1), wobei die erste Systembenutzervorrichtung (UE1) einer ersten Systembasisstation zugeordnet ist, die eine Heim-/Pico-Basisstation (HBS1) ist, und einer zweiten Systembasisstation, die eine Makro-Basisstation (MBS1) ist, Zuteilen durch die Makro-Basisstation (MBS1) einer maximalen Aufwärtsleistung für die erste Systembenutzervorrichtung (UE1) und Halten der Übertragungen zwischen der ersten Systembenutzervorrichtung (UE1) und der Heim-/Pico-Basisstation (HBS1), so dass die maximale Aufwärtsleistung nicht überschritten wird und Interferenz zwischen der ersten Systembenutzervorrichtung (UE1) und der Makro-Basisstation (MBS1) und sonstigen Benutzervorrichtungen minimiert wird, wobei das Verfahren weiterhin Zuteilen eines Abwärts-Orthogonalcodes zu der ersten Systembenutzervorrichtung (UE1) von der Heim-/Pico-Basisstation (HBS1); Benachrichtigen durch die erste Systembenutzervorrichtung (UE1) der Makro-Basisstation (MBS1) über zugeteilten Code und Vergleichen durch die Makro-Basisstation (MBS1) des zugeteilten Codes mit durch die Makro-Basisstation (MBS1) zugeteilten Codes umfasst; wobei die Makro-Basisstation (MBS1) die erste Systembenutzervorrichtung (UE1) bittet, die Heim-/Pico-Basisstation (HBS1) aufzufordern, den der ersten Systembenutzervorrichtung (UE1) von der Heim-/Pico-Basisstation (HBS1) zugeteilten Code zu ändern, wenn das Ergebnis des Vergleichs darin besteht, dass der Code bereits durch die Makro-Basisstation (MBS1) zugeteilt worden ist.

2. Verfahren nach Anspruch 1, wobei die zugeteilte Aufwärtsleistung der ersten Systembenutzervorrichtung (UE1) durch die erste Systembenutzervorrichtung (UE1) der Heim-/Pico-Basisstation (HBS1) mitgeteilt wird und die Heim-/Pico-Basisstation (HBS1) die Aufwärtsleistung für alle ihre Benutzervorrichtungen unter dem zugeteilten Höchstwert hält.

3. Verfahren nach Anspruch 1, wobei die erste Systembenutzervorrichtung (UE1) sicherstellt, dass sie die zugeteilte maximale Aufwärtsleistung nicht überschreitet.

4. Verfahren nach einem beliebigen vorhergehenden Anspruch, wobei der Auslöser das Aufbauen eines Funkträgers zwischen der Heim-/Pico-Basisstation (HBS1) und der ersten Systembenutzervorrichtung (UE1); oder Ablauf eines periodischen Zeitgebers umfasst.

5. Verfahren nach einem beliebigen vorhergehenden Anspruch, wobei die zugeteilte maximale Aufwärtsleistung an der Heim-/Pico-Basisstation (HBS1) der Mindestwert der zugeteilten maximalen Aufwärtsleistung aller Benutzervorrichtungen in dem ersten drahtlosen Kommunikationssystem ist.

6. Verfahren nach einem beliebigen vorhergehenden Anspruch, wobei ein Pilotkanal von der Heim-/Pico-Basisstation (HBS1) einer Zeitverschiebung eines vorbestimmten Betrags unterliegt.

7. Verfahren nach Anspruch 6, wobei die erste Systembenutzervorrichtung (UE1) die Heim-/Pico-Basisstation (HBS1) über ihre Unfähigkeit zum Decodieren eines Pilotkanals benachrichtigt, wonach die Heim-/Pico-Basisstation (HBS1) die Zeitverschiebung anlegt.

8. Drahtloses Kommunikationssystem, umfassend eine Makro-Basisstation (MBS1), eine Heim-/Pico-Basisstation (HBS1) und eine erste Benutzervorrichtung (UE1), die der Heim-/Pico-Basisstation (HBS1) zugeordnet ist, wobei als Reaktion auf einen Auslöser
die erste Benutzervorrichtung (UE1) Mittel eingerichtet zum Aufbauen einer Verbindung mit der Makro-Basisstation (MBS1) aufweist;
die Makro-Basisstation (MBS1) Mittel eingerichtet zum Zuteilen einer maximalen Aufwärtsleistung für die erste Benutzervorrichtung (UE1) aufweist;
die erste Benutzervorrichtung (UE1) Mittel eingerichtet zum Halten von Übertragungen zu der Heim-/Pico-Basisstation (HBS1) aufweist, so dass die maximale Aufwärtsleistung nicht überschritten wird und Interferenz zwischen der ersten Systembenutzervorrichtung (UE1) und der Makro-Basisstation (MBS1) minimiert wird;
die Heim-/Pico-Basisstation (HBS1) Mittel eingerichtet zum Zuteilen eines Abwärts-Orthogonalcodes zu der ersten Benutzervorrichtung (UE1) aufweist;
die erste Benutzervorrichtung (UE1) Mittel eingerichtet zum Benachrichtigen der Makro-Basisstation (MBS1) über den zugeteilten Code aufweist;
die Makro-Basisstation (MBS1) Mittel weiterhin eingerichtet zum Vergleichen des zugeteilten Codes mit durch sie selbst zugeteilten Codes aufweist, **dadurch gekennzeichnet, dass** die Makro-Basisstation (MBS1) Mittel aufweist, weiterhin eingerichtet zum Bitten der ersten Benutzervorrichtung (UE1), die Heim-/Pico-Basisstation (HBS1) aufzufordern, den der ersten Benutzervorrichtung (UE1) zugeteilten Code zu ändern, wenn das Ergebnis des Vergleichs darin besteht, dass der Code bereits durch die Makro-Basisstation (MBS1) zugeteilt worden ist.

9. Drahtloses Kommunikationssystem nach Anspruch 8, wobei die erste Benutzervorrichtung (UE1) weiterhin eingerichtet ist, der Heim-/Pico-Basisstation (HBS1) die zugeteilte Aufwärtsleistung mitzuteilen.

10. Drahtloses Kommunikationssystem nach Anspruch 9, wobei die Heim-/Pico-Basisstation (HBS1) eingerichtet ist, die Aufwärtsleistung für alle ihre Benutzervorrichtungen unter dem zugeteilten Höchstwert zu halten.

11. Drahtloses Kommunikationssystem nach Anspruch 8, wobei die erste Benutzervorrichtung (UE1) eingerichtet ist, sicherzustellen, dass sie die zugeteilte maximale Aufwärtsleistung nicht überschreitet.

12. Drahtloses Kommunikationssystem nach einem beliebigen der Ansprüche 8 bis 11, wobei die Heim-/Pico-Basisstation (HBS1) weiterhin eingerichtet ist, eine 2eitverschiebung eines vorbestimmten Betrags an einen Pilotkanal anzulegen.

13. Drahtloses Kommunikationssystem nach Anspruch 12, wobei die erste Benutzervorrichtung (UE1) eingerichtet ist, die Heim-/Pico-Basisstation (HBS1) über ihre Unfähigkeit zum Decodieren eines Pilotkanals zu benachrichtigen und wobei die Heim-/Pico-Basisstation zum Anlegen der Zeitverschiebung als Reaktion auf die Benachrichtigung eingerichtet ist.

14. Computerprogramm, umfassend Programmcodemittel zum Durchführen der Schritte eines beliebigen der Ansprüche 1 bis 7, wenn das Programm auf einem Prozessor abläuft.

## Revendications

1. Un procédé de régulation d'un brouillage entre des premier et deuxième systèmes de communication sans fil, chaque système comprenant une station de base (HBS1, MBS1), le procédé comprenant, en réponse à un déclencheur, l'établissement d'une connexion entre un premier dispositif utilisateur système (UE1), le premier dispositif utilisateur système (UE1) étant associé à une première station de base système qui est une station de base pico/domestique (HBS1) et une deuxième station de base système qui est une station de base macro (MBS1), l'attribution, par la station de base macro (MBS1), d'une puissance en liaison montante maximale pour le premier dispositif utilisateur système (UE1) et l'arrêt des transmissions entre le premier dispositif utilisateur système (UE1) et la station de base pico/domestique (HBS1), de sorte que la puissance en liaison montante maximale ne soit pas dépassée et le brouillage entre le premier dispositif utilisateur système (UE1) et la station de base macro (MBS1) et d'autres dispositifs utilisateurs soit minimisé, le procédé comprenant en outre l'attribution d'un code orthogonal en liaison descendante au premier dispositif utilisateur système (UE1) à partir de la station de base pico/domestique (HBS1), la notification, par le premier dispositif utilisateur système (UE1), à la station de base macro (MBS1) du code attribué et la comparaison, par la station de base macro (MBS1), du code attribué à des codes attribués par la station de base macro (MBS1), la station de base macro (MBS1) demandant au premier dispositif utilisateur système (UE1) de demander à la station de base pico/domestique (HBS1) de modifier le code attribué au premier dispositif utilisateur système (UE1) à partir de la station de base pico/domestique (HBS1) si le résultat de la comparaison est que ce code a déjà été attribué par la station de base macro (MBS1),

2. Un procédé selon la revendication 1, dans lequel la puissance en liaison montante attribuée du premier dispositif utilisateur système (UE1) est notifiée par le premier dispositif utilisateur système (UE1) à la station de base pico/domestique (HBS1) et la station de base pico/domestique (HBS1) maintient la puissance en liaison montante pour tous ses dispositifs utilisateurs sous le maximum attribué.

3. Un procédé selon la revendication 1, dans lequel le premier dispositif utilisateur système (UE1) garantit qu'il ne dépasse pas la puissance en liaison montante maximale attribuée.

4. Un procédé selon l'une quelconque des revendications précédentes, dans lequel le déclencheur comprend une opération parmi l'établissement d'une porteuse radio entre la station de base pico/domestique (HBS1) et le premier dispositif utilisateur système (UE1) et l'expiration d'une horloge périodique.

5. Un procédé selon l'une quelconque des revendications précédentes, dans lequel la puissance en liaison montante maximale attribuée à la station de base pico/domestique (HBS1) est le minimum de la puissance en liaison montante maximale attribuée de tous les dispositifs utilisateurs dans le premier système de communication sans fil.

6. Un procédé selon l'une quelconque des revendications précédentes, dans lequel un canal pilote provenant de la station de base pico/domestique (HBS1) fait l'objet d'un décalage temporel d'une quantité prédéterminée.

7. Un procédé selon la revendication 6, dans lequel le premier dispositif utilisateur système (UE1) notifie la station de base pico/domestique (HBS1) de son incapacité à décoder un canal pilote, après quoi la station de base pico/domestique (HBS1) applique le décalage temporel.

8. Un système de communication sans fil comprenant une station de base macro (MBS1), une station de base pico/domestique (HBS1) et un premier dispositif utilisateur (UE1) qui est associé à la station de base pico/domestique (HBS1) dans lequel, en réponse à un déclencheur,
le premier dispositif utilisateur (UE1) possède un moyen configuré de façon à établir une connexion avec la station de base macro (MBS1),
la station de base macro (MBS1) possède un moyen configuré de façon à attribuer une puissance en liaison montante maximale pour le premier dispositif utilisateur (UE1),
le premier dispositif utilisateur (UE1) possède un moyen configuré de façon à arrêter des transmissions vers la station de base pico/domestique (HBS1), de sorte que la puissance en liaison montante maximale ne soit pas dépassée et le brouillage entre le premier dispositif utilisateur système (UE1) et la station de base macro (MBS1) soit minimisé,
la station de base pico/domestique (HBS1) possède un moyen configuré de façon à attribuer un code orthogonal en liaison descendante au premier dispositif utilisateur (UE1),
le premier dispositif utilisateur (UE1) possède un moyen configuré de façon à notifier la station de base macro (MBS1) le code attribué,
la station de base macro (MBS1) possède un moyen configuré en outre de façon à comparer le code attribué à des codes attribués par elle-même, **caractérisée en ce que** la station de base macro (MBS1) possède un moyen configuré en outre de façon à demander au premier dispositif utilisateur système (UE1) de demander à la station de base pico/domestique (HBS1) de modifier le code attribué au premier dispositif utilisateur (UE1) si le résultat de la comparaison est que ce code a déjà été attribué par la station de base macro (MBS1).

9. Un système de communication sans fil selon la revendication 8, dans lequel le premier dispositif utilisateur (UE1) est configuré en outre de façon à notifier à la station de base pico/domestique (HBS1) la puissance en liaison montante attribuée.

10. Un système de communication sans fil selon la revendication 9, dans lequel la station de base pico/domestique (HBS1) est configurée de façon à maintenir la puissance en liaison montante pour tous ses dispositifs utilisateurs sous le maximum attribué.

11. Un système de communication sans fil selon la revendication 8, dans lequel le premier dispositif utilisateur (UE1) est configuré de façon à garantir qu'il ne dépasse pas la puissance en liaison montante maximale attribuée.

12. Un système de communication sans fil selon l'une quelconque des revendications 8 à 11, dans lequel la station de base pico/domestique (HBS1) est configurée en outre de façon à appliquer un décalage temporel d'une quantité prédéterminée à un canal pilote.

13. Un système de communication sans fil selon la revendication 12, dans lequel le premier dispositif utilisateur (UE1) est configuré de façon à notifier la station de base pico/domestique (HBS1) de son incapacité à décoder un canal pilote, et dans lequel la station de base pico/domestique est configurée de façon à appliquer le décalage temporel en réponse à la notification.

14. Un programme informatique contenant un moyen de code de programme adapté de façon à exécuter les étapes selon l'une quelconque des revendications 1 à 7 lorsque le programme est exécuté sur un processeur.
